# EUROPEAN PATENT SPECIFICATION

(11) **EP 1 124 705 B1**
(45) Date of publication and mention of the grant of the patent: **20.11.2002**
(21) Application number: 99953817.6
(22) Date of filing: 06.10.1999
(51) Int. Cl.: B60M 3/02

(54) **TRACTION POWER SUPPLY SYSTEMS**
STROMVERSORGUNGSANLAGE FÜR EISENBAHN
SYSTEME D'ALIMENTATION POUR TRACTION

(30) Priority: 06.10.1998 GB 9821696
(43) Date of publication of application: 22.08.2001
(73) Proprietor: Balfour Beatty PLC, London SW1V 1LQ (GB)
(72) Inventor: SCHÜTTE, Thorsten, S-722 28 Västeras (SE)
(74) Representative: Reyier, Ann-Mari
(86) International application number: EP9907723
(87) International publication number: WO00020246

(56) References cited:
- DE-B- 2 643 656
- DE-C- 301 503
- TRISTAN A. KNESCHKE: "Simple Method for Determination of Substation Spacing for AC and DC Electrification Systems" IEEE TRANSACTIONS ON INDUSTRY APPLICATIONS, vol. 22, no. 4, July 1986 (1986-07), pages 763-780, XP002128577 New York, USA
- DATABASE WPI Section PQ, Week 199146 Derwent Publications Ltd., London, GB; Class Q14, AN 1991-337941 XP002128578 BOCHEV A S: & SU 1 614 970 A (ROST RAIL TRNSP ENG), 23 December 1990 (1990-12-23)

## Description

### Background to the invention

The present invention relates to an electricity supply system for traction.

Where power demands are heavy, the power delivered by a conventional traction supply system may be insufficient and additional power transmission means are therefore required to be installed. The additional transmission means may comprise a high voltage supply system providing a voltage which is symmetrical with respect to ground and thus requiring two high voltage conductors. The high voltage conductors may be mounted on separate poles or on the catenary poles, an example of the latter system being described in "Führung einer Bahnstromleitung am Oberleitungsgestänge" Bauer, K-H and Kiessling, F, Elektrische Bahnen 78 (1980) H.10, pp 257-260. This paper also mentions the technical and economic disadvantages of mounting the two high voltage (in this case ±55 kV) conductors.

The use of booster transformers in traction power supplies is described in R.J. Hill, "Electric Railway Traction - Part 3 - Traction Power Supplies", Power Engineering Journal, December 1994, pp 275-286. A booster transformer with a unity turns ratio has its primary connected into the catenary wire and its secondary connected into a return conductor provided in parallel with the rails. Traction return current is forced from the rails and earth to flow through the return conductor and transformer secondary to equalise the Ampere-turns in the core set up by the primary current. A low feeding impedance is achieved and earth currents and their associated interference are reduced.

### Summary of the invention

It is an object of the invention to provide an additional power transmission means whilst obtaining the advantages of booster transformers.

The present invention provides an electricity supply system for traction, comprising first and second supply conductors supplied with first and second voltages, respectively, a return conductor, and means for rendering the current in one of said conductors substantially equal to the sum of the currents in the other two conductors.

The current equalising means may comprise at least one current booster transformer. In one embodiment of the invention, at least one pair of current booster transformers is provided, one winding of each transformer of the pair being connected in parallel into the return conductor and the other winding of each transformer being connected into a respective one of the supply conductors.

In an alternative embodiment, at least one current booster transformer has one winding connected into each of said three conductors. The transformer with three windings generally has a return conductor winding having a number of turns equal to the number of turns of each of the other two windings and is referred to herein as a current adding booster transformer.

The first supply conductor may be a catenary and the second supply conductor may be a high voltage line constituting an additional power transmission means. The first and second voltages may be substantially in phase, and the current in the return conductor may be substantially equal to the sum of the currents in the first and second conductors. Alternatively, the first and second voltages may be substantially 180° out of phase, and the current in the first conductor may be substantially equal to the sum of the currents in the second and return conductors.

In an alternative embodiment, the first and second voltages are substantially equal in magnitude but out of phase, i.e. symmetrical about ground. The return conductor may not extend for the entire distance between autotransformers to which the first and second conductors are connected. Instead, the return conductor may only extend for a central portion, say one third of that distance and may be connected at its ends to the rails along which a vehicle runs .

Where the second supply conductor is a high voltage conductor, it can be made to bypass a portion of the system which passes through a station, city, tunnel or the like, together with a branch of the return conductor or catenary. In that portion the catenary and local return currents may be made equal by a current booster transformer, and the currents in the two bypassing conductors may similarly be equalised.

### Brief description of the drawings

The present invention will now be described in more detail, by way of example only, with respect to the accompanying drawings, in which:-
Figure 1 is a schematic circuit diagram of a traction power supply system in accordance with a first embodiment of the invention;
Figure 2 is a schematic circuit diagram of a second embodiment of traction power supply system;
Figures 3a and 3b show alternative arrangements for mounting the conductors on poles;
Figure 4 is a schematic circuit diagram of a third embodiment of traction power supply system;
Figure 5 is a schematic circuit diagram of a fourth embodiment of traction power supply system;
Figures 6 and 7 are schematic circuit diagrams of bypass arrangements; and
Figures 8 and 9 are schematic circuit diagrams of fifth and sixth embodiments respectively of a traction power supply system.

### Detailed description of the preferred embodiments

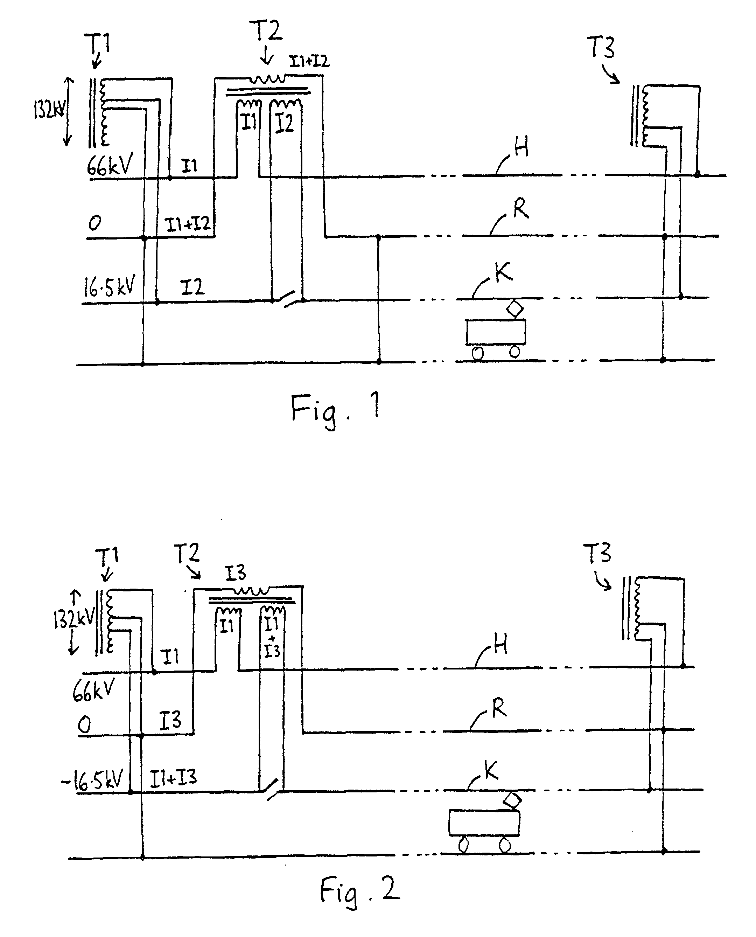

Figure 1 shows a supply transformer T1, which in this example is an autotransformer connected to the 132 kV, 16.7 Hz grid as used in Sweden. Taps on the autotransformer are connected to a catenary K, at an idling voltage of 16.5 kV, a high voltage line H at 66 kV and a common return conductor R connected to the rails at intervals.

At intervals of typically 5 km the windings of a current adding booster transformer T2 are connected into each of the conductors K, H and R. The transformer T2 is wound such that the number of turns in the return conductor winding is equal to the sum of the number of turns of the other two windings. This forces the current in the return conductor R to be I1 + I2, the sum of the catenary current I2 and the high voltage current I1.

At much longer distances, typically 50 km, feeding transformers T3 are arranged along the railway. In this example the transformers T3 are 66 kV/16.5 kV autotransformers. Increased power transmission is achieved if the high voltage line H is at a voltage significantly higher than that of the catenary K, the upper limit of the high voltage being determined by insulation and safety considerations. In Europe, single phase high voltage networks having a voltage symmetrical with respect to ground are used (2 x 66 kV = 132 kV in Sweden and Switzerland and 2 x 55 kV = 110 kV in Germany and Austria). Thus it is convenient for the high voltage line H to be at 55 kV or 66 kV. Since only one high voltage line is required, costs and safety risks are reduced. The catenary voltage is in phase with the high voltage. If no high voltage is supplied to the conductor H (I1=0), the system will continue to function as a normal current booster transformer traction feeding system. Conversely, if the catenary K is not energised (I2=0) the system will act as a high voltage supply system with booster transformers.

In comparison to a conventional autotransformer system in which autotransformers typically rated at 10 MVA and having a number of turns corresponding to twice the traction voltage are installed about every 10 km along the railway line, the system shown in Figure 1 has a much lower transformer rating and a correspondingly reduced cost. The booster transformers T2 have a rated power of a few hundred kVA and a few hundred volts are dropped across each winding.

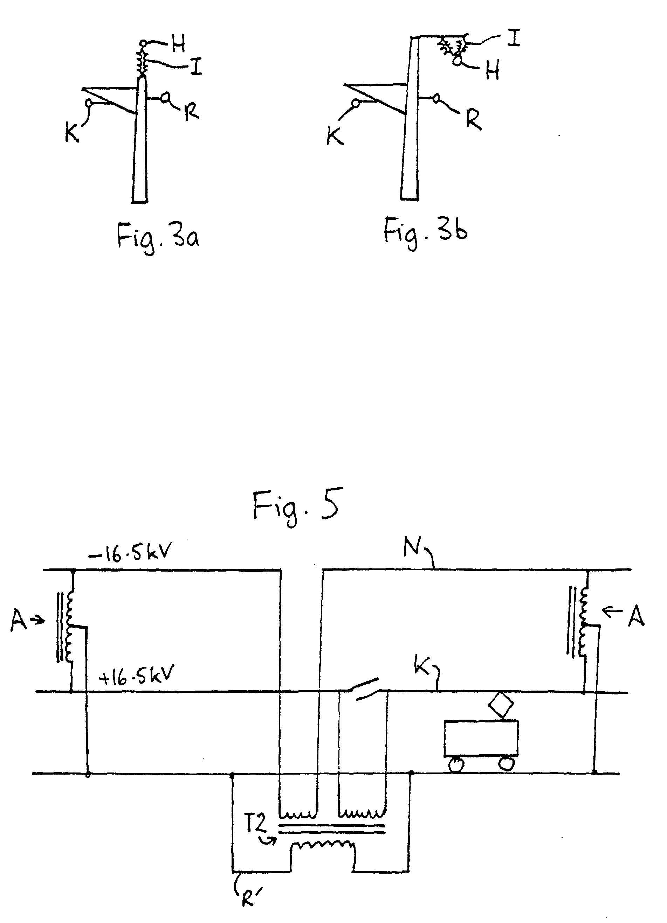

Figure 2 shows an alternative arrangement in which the taps on the autotransformer T1 are placed so that the voltages on the catenary conductor K and high voltage conductor H are 180° out of phase. The roles of the catenary K and return conductor R are interchanged as compared with Figure 1, and the magnitude of the catenary current is I1 + I3 where I1 is the high voltage current and I3 the return current. An advantage of this system is that the transmission voltage is further increased and in this example is 66 + 16.5 = 82.5 kV.

If no high voltage is supplied to the conductor H (I1=O), the system will continue to function as a normal current booster traction feeding system. Conversely, if the catenary K is not energised, the system will act as a high voltage supply system with booster transformers, the voltage available being that between the high voltage conductor and ground (in this example 66 kV).

Figures 3a and 3b show two possible configurations for mounting the three conductors K, H and R on a single pole, I being a high voltage insulator.

It should be understood that the voltages, frequencies and transformer types of transformers T1 and T3 can be different from those mentioned above. Thus the transformers T1 and T3 could be full transformers and the frequency could be any of the frequencies relevant for traction. A particularly advantageous choice of voltage for the high voltage conductor H in Figure 2, when the catenary K is at 16.5 kV (nominally 15 kV) and the frequency is 16.7 Hz, is 27.5 kV (nominally 25 kV). 25 kV is a standardized voltage for railway use and thus standard components can be connected to the high voltage conductor. The resulting transmission voltage is 44 kV (nominally 40 kV) which is adequate for many applications. For 25 kV public frequency electrified railways the symmetric 2 x 25 kV system is a convenient choice with 55 kV (nominally 50 kV) transmission voltage.

Figure 4 shows an alternative system for autotransformer-fed lines. The return conductor R is constituted by the rails along which vehicles run. In conventional current booster transformer systems, the booster transformers are seldom connected into the rails, a separate return conductor usually being provided since this must carry the entire current between two adjacent feeding stations. In an autotransformer system according to the invention, by contrast, the return current is essentially due only to the locomotive(s) between two adjacent autotransformers A. In many cases, the interference suppressing ability of this simplified system will be satisfactory, saving the considerable cost of a separate return conductor. In Figure 4, a booster transformer T2 shows the principle of the invention, whilst a further booster transformer T2' shows how dangerous voltages between rail sections can be avoided by forming an intermediate rail section connected to a center tap of the booster transformer T2' in a conventional manner.

A further adaptation of the system is shown in Figure 5. Autotransformers A feed symmetrical voltages to a catenary K and a negative feeder N. The earth current has its maximum at the midpoint between two autotransformers and is zero at the location of the autotransformers. Thus a return conductor R' is installed along only approximately the middle third of the distance between the two autotransformers. The return current flows along the rails for approximately the outer thirds of this distance, with earth currents being kept small. The return conductor R' is interconnected with the catenary K and negative feeder N by a current adding booster transformer T2. As well as the return currents, the induced voltages are also kept low by this arrangement.

The voltage shown in Figure 5, 2 x 16.5 kV, is only an example and the system will work with other voltages and, in principle, non-symmetric voltages.

It is considered that the systems shown in Figures 2, 4 and 5 will approximately double the distance between the expensive autotransformers as compared with conventional autotransformer-fed systems.

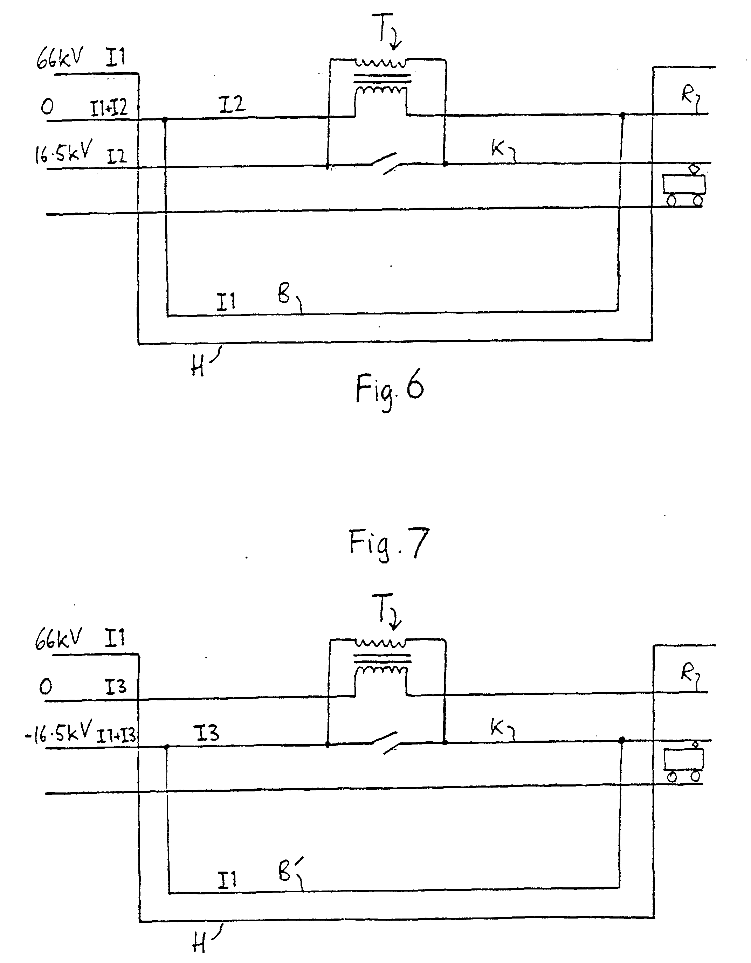

Figures 6 and 7 show systems that can be used as adjuncts to the systems of Figures 1 and 2 respectively when the electrified railway passes through a station, city, tunnel, or other point at which it is undesirable that the high voltage conductor H should be present. In Figure 6, the high voltage conductor and a branched local return conductor B are arranged in a bypassing configuration. In Figure 7, the high voltage conductor and a branched catenary B' bypass a remaining portion of the system. The local return conductor is essentially at ground potential in the case of the system of Figure 6 or at the catenary voltage in the case of Figure 7.

The catenary current and the current in the non-bypassing return conductor are equalised by an ordinary current booster transformer T. In some cases, especially for shorter distances, this transformer T can be omitted. On the other hand, current control can alternatively or additionally be enhanced by inserting a current booster transformer into the bypass, linking the bypassing high voltage conductor with the branch B or B'.

The embodiments of the invention shown in Figures 1, 2, 4 and 5 can be modified by substituting two ordinary current booster transformers for each current adding booster transformer.

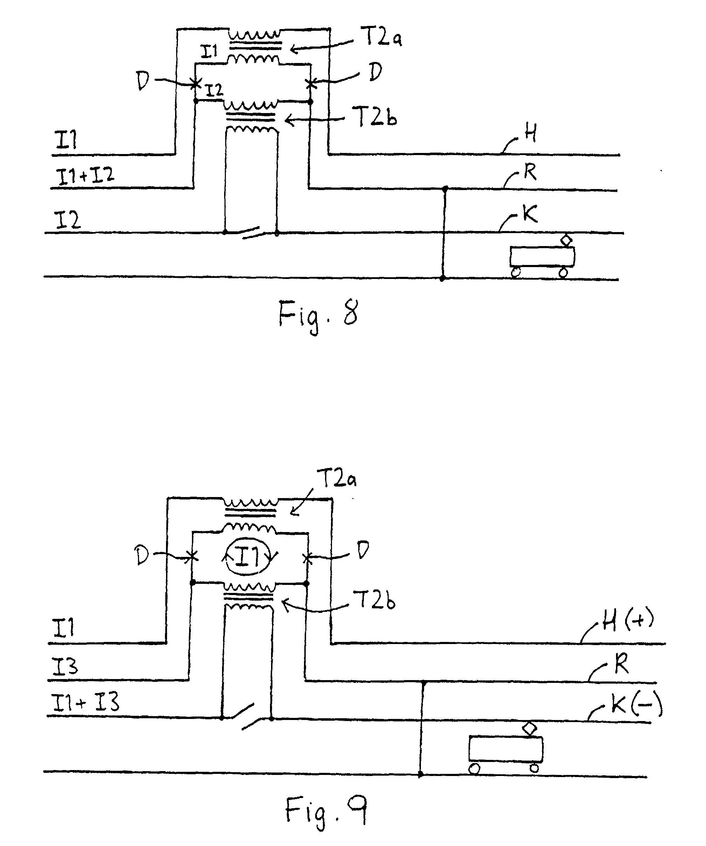

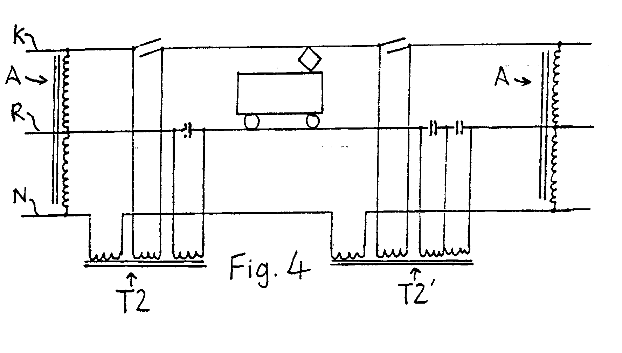

Figure 8 shows how this modification affects the system described above with respect to Figure 1 in which the catenary and high voltage currents are in phase. A first conventional current booster transformer T2a has windings connected into the high voltage conductor H and a first branch of the return conductor R, thus forcing the high voltage current I1 into this branch. A second branch of the return conductor carries current 12, the catenary current, by the action of a second conventional current booster transformer T2b. The first and second branches are connected in parallel and thus the current in the return conductor R is I1+I2. Advantageously, disconnecters D can be used to disconnect the two branches of R, thus making the use of only one of the catenary K or high voltage conductor H easier in an emergency.

Figure 9 shows the corresponding modification of the system of Figure 2 or 5, in which the voltages on conductors K and H are of opposite phase. In this case a first booster transformer T2a forces current I1 into a first branch of the return conductor R and a second booster transformer T2b forces current I1+I3 into a second branch of the return conductor. A current I1 flows in a closed loop formed from the two parallel connected branches, and the current in the return conductor R becomes the difference between I1+I3 and I1, i.e. I3 as desired. This system has the advantage that when conductors K and H are fed from autotransformers and their voltages are equal in magnitude but opposite in phase, conventional current booster transformers for that voltage can be used. Again, disconnecters D are provided for disconnecting the branches of the return conductor R in order to utilise only one of the catenary K or high voltage conductor H in an emergency.

The current booster transformers T2, T2a, T2b used in the invention could be oil-filled transformers, but more preferably they are formed as "dry" transformers in which the windings for high voltage and/or catenary are surrounded in turn by semiconducting, insulating and semiconducting layers, with the return conductor winding being formed as a coaxial screen on this winding or at least one of these windings.

Whilst the embodiments of the invention described above with respect to Figures 1, 2, 7 and 8 include a dedicated return conductor R, it should be understood that the return conductor could alternatively be constituted by the rails along which the vehicle runs.

It should also be pointed out that the catenaries, high voltage conductors and return conductors/rails of more than one track (e.g. two in a double-tracked line) can be connected to one autotransformer common to the tracks.

## Claims

1. An electricity supply system for traction, comprising first (K) and second (H; N) supply conductors supplied with first and second voltages respectively, a return conductor (R), **characterised by** comprising means (T2; T2'; T2a, T2b) for rendering the current in one of said conductors substantially equal to the sum of the currents in the other two conductors.

2. A system according to claim 1, wherein the current equalising means comprises at least one current booster transformer (T2; T2').

3. A system according to claim 2, wherein the current equalising means comprises at least one pair of current booster transformers (T2a, T2b), each transformer of the pair having one winding connected into one of two parallel branches of the return conductor (R), and the other winding of each transformer of the pair-being connected into a respective one of the supply conductors (K, H, N).

4. A system according to claim 2, wherein said at least one current booster transformer (T2; T2') has one winding connected into each of said three conductors.

5. A system according to any preceding claim, wherein the first supply conductor is a catenary (K) and the second supply conductor is a high voltage line (H) constituting an additional power transmission means.

6. A system according to claim 5, wherein the first and second voltages are substantially in phase, and the current in the return conductor (R) is substantially equal to the sum of the currents in the first (K) and second (H) conductors.

7. A system according to claim 5, wherein the first and second voltages are substantially 180° out of phase, and the current in the first conductor (K) is substantially equal to the sum of the currents in the second (H) and return (R) conductors.

8. A system according to any one of claims 1 to 4, wherein the first and second voltages are substantially symmetrical about ground.

9. A system according to claim 8, wherein the return conductor (R) extends only over a central portion of the distance between autotransformers (A) to which the first (K) and second (H; N) conductors are connected.

10. A system according to claim 9, wherein said portion is approximately one third of said distance.

11. A system according to any of claims 1 to 8, wherein the return conductor (R) is constituted by rails along which a vehicle is constrained to run.

12. A system according to claim 6, wherein a portion of the high voltage line (H) and a branch of the return conductor (R) bypass a remaining portion of the system.

13. A system according to claim 7, wherein a portion of the high voltage line (H) and a branch of the catenary (K) bypass a remaining portion of the system.

14. A system according to claim 12 or 13, wherein the currents in the remaining portion of the return conductor (R) and catenary (K) are equalised by means of a current booster transformer (T).

15. A system according to claim 12, 13 or 14, wherein the currents in the two bypassing conductors (H, K; R, K) are equalised by means of a current booster transformer.

## Patentansprüche

1. Ein System für Bahnstromversorgung, umfassend ersten (K) und zweiten (H; N) Speiseleiter, mit einer ersten beziehungsweise zweiten Spannung versorgt, und einen Rückleiter (R), **dadurch gekennzeichnet, dass** es Mittel umfasst, den Strom in einem der genannten Leiter im Wesentlichen der Summe der Ströme in den anderen zwei Leitern anzugleichen.

2. Ein System nach Anspruch 1, wobei die den Strom angleichenden Mittel wenigstens einen Saugtransformator (T2; T2') umfassen.

3. Ein System nach Anspruch 2, wobei die den Strom angleichenden Mittel wenigstens ein Paar Saugtransformatoren (T2a, T2b) umfassen, wobei eine Wicklung jedes Transformators eines Paares an einen von zwei parallelen Zweigen des Rückleiters (R) angeschlossen ist und die andere Wicklung jedes Transformators eines Paares an jeweils einen der Speiseleiter (K, H, N) angeschlossen ist.

4. Ein System nach Anspruch 2, wobei der erwähnte wenigstens eine Saugtransformator (T2; T2') mit je einer Wicklung an jeden der erwähnten drei Leiter angeschlossen ist.

5. Ein System nach einem der vorgenannten Ansprüche, wobei der erste Speiseleiter eine Oberleitung (K) ist und der zweite Speiseleiter ein Hochspannungsleiter (H) ist, ein weiteres Mittel für die Leistungsübertragung ausmachend.

6. Ein System nach Anspruch 5, wobei die erste und die zweite Spannung im Wesentlichen in Phase sind und der Strom in dem Rückleiter (R) im Wesentlichen gleich der Summe der Ströme in dem ersten (K) und zweiten (H) Leiter ist.

7. Ein System nach Anspruch 5, wobei die erste und die zweite Spannung im Wesentlichen um 180 Grad phasenverschoben sind und der Strom in dem ersten Leiter (K) im Wesentlichen gleich der Summe der Ströme in dem zweiten Leiter (H) und dem Rückleiter (R) ist.

8. Ein System nach einem der Ansprüche 1 bis 4, wobei die erste und zweite Spannung im Wesentlichen symmetrisch gegen Erde sind.

9. Ein System nach Anspruch 8, wobei der Rückleiter (R) sich nur über einen zentralen Abschnitt des Abstandes zwischen Autotransformatoren (A) erstreckt, zu welchen der erste (K) und zweite (H; N) Leiter angeschlossen sind.

10. Ein System nach Anspruch 9, wobei der genannte Abschnitt etwa ein Drittel des genannten Abstandes ist.

11. Ein System nach einem der Ansprüche 1 bis 8, wobei der Rückleiter (R) aus Schienen besteht, an welchen entlang ein Fahrzeug geführt wird.

12. Ein System nach Anspruch 6, wobei ein Abschnitt des Hochspannungsleiters (H) und ein Zweig des Rückleiters (R) an einem übrigen Teil des Systems vorbeigeführt wird.

13. Ein System nach Anspruch 7, wobei ein Abschnitt des Hochspannungsleiters (H) und ein Zweig des Oberleitung (K) an einem übrigen Teil des Systems vorbeigeführt wird.

14. Ein System nach Anspruch 12 oder 13, wobei die Ströme in den übrigen Teilen von Rückleiter (R) und Oberleitung (K) mit Hilfe eines Saugtransformators angeglichen werden.

15. Ein System nach Anspruch 12, 13 oder 14, wobei die Ströme in den zwei vorbeigeführten Leitern (H, K; R, K) mit Hilfe eines Saugtransformators angeglichen werden.

## Revendications

1. Système d'alimentation en électricité pour traction, comprenant des premier (K) et deuxième (H ; N) conducteurs d'alimentation, alimentés par des première et deuxième tensions respectivement, un conducteur de retour (R), **caractérisé par le fait qu'**il comprend un moyen (T2 ; T2' ; T2a, T2b) servant à rendre le courant qui passe dans l'un desdits conducteurs essentiellement égal à la somme des courants qui passent dans les deux autres conducteurs.

2. Système selon la revendication 1, dans lequel le moyen d'égalisation de courant comprend au moins un transformateur survolteur de courant (T2 ; T2').

3. Système selon la revendication 2, dans lequel le moyen d'égalisation de courant comprend au moins une paire de transformateurs survolteurs de courant (T2a, T2b), chaque transformateur de la paire ayant un enroulement connecté à l'une des deux branches parallèles du conducteur de retour (R), et l'autre enroulement de chaque transformateur de la paire étant connecté à l'un correspondant des conducteurs d'alimentation (K, H, N).

4. Système selon la revendication 2, dans lequel ledit au moins un transformateur survolteur de courant (T2 ; T2') a un enroulement connecté à chacun desdits trois conducteurs.

5. Système selon l'une quelconque des revendications précédentes, dans lequel le premier conducteur d'alimentation est un caténaire (K) et le deuxième conducteur d'alimentation est une ligne à haute tension (H) constituant un moyen de transmission de puissance additionnel.

6. Système selon la revendication 5, dans lequel les première et deuxième tensions sont essentiellement en phase, et le courant qui passe dans le conducteur de retour (R) est essentiellement égal à la somme des courants qui passent dans les premier (K) et deuxième (H) conducteurs.

7. Système selon la revendication 5, dans lequel les première et deuxième tensions sont essentiellement déphasées de 180°, et le courant qui passe dans le premier conducteur (K) est essentiellement égal à la somme des courants qui passent dans le deuxième conducteur (H) et le conducteur de retour (R).

8. Système selon l'une quelconque des revendications 1 à 4, dans lequel les première et deuxième tensions sont essentiellement symétriques autour de la terre.

9. Système selon la revendication 8, dans lequel le conducteur de retour (R) s'étend uniquement sur une partie centrale de la distance entre des autotransformateurs (A) auxquels sont connectés les premier (K) et deuxième (H ; N) conducteurs.

10. Système selon la revendication 9, dans lequel ladite partie fait approximativement un tiers de ladite distance.

11. Système selon l'une quelconque des revendications 1 à 8, dans lequel le conducteur de retour (R) est constitué de rails le long desquels un véhicule est contraint d'avancer.

12. Système selon la revendication 6, dans lequel une partie de la ligne à haute tension (H) et une branche du conducteur de retour (R) contournent une partie restante du système.

13. Système selon la revendication 7, dans lequel une partie de la ligne à haute tension (H) et une branche du caténaire (K) contournent une partie restante du système.

14. Système selon l'une des revendications 12 ou 13, dans lequel les courants qui passent dans la partie restante du conducteur de retour (R) et du caténaire (K) sont égalisés au moyen d'un transformateur survolteur de courant (T).

15. Système selon l'une des revendications 12, 13 ou 14, dans lequel les courants qui passent dans les deux conducteurs de dérivation (H, K ; R, K) sont égalisés au moyen d'un transformateur survolteur de courant.
